# EUROPEAN PATENT SPECIFICATION

(11) **EP 2 138 338 B1**
(45) Date of publication and mention of the grant of the patent: **30.11.2011**
(21) Application number: 08159098.6
(22) Date of filing: 26.06.2008
(51) Int. Cl.: B60J 7/02, B60J 7/043, E05B 65/08, E05B 65/12

(54) **Safety arrangement for a slideable member on a vehicle**
Sicherheitsanordnung für ein Schiebeelement eines Fahrzeuges
Agencement de sécurité pour élément coulissant sur un véhicule

(43) Date of publication of application: 30.12.2009
(73) Proprietor: Volvo Car Corporation, 405 31 Göteborg (SE)
(72) Inventor: Dominique, Christer, S-423 53 Torslanda (SE); Hansson, Helene, S-429 42 Särö (SE)
(74) Representative: VALEA AB

(56) References cited:
- WO-A-2006/027510
- DE-A1-102007 002 427
- US-A- 5 895 088
- US-A1- 2001 054 834
- US-B1- 6 309 014

## Description

### TECHNICAL FIELD

The present invention relates to a safety arrangement for securing accidental dislocation of a slideable member on a vehicle.

### BACKGROUND OF THE INVENTION

An ever increasing amount of automotive vehicles on the roads contributes to the risk of increasing amounts of accidents. As the number of accidents increases, the focus on crash safety and personal safety for the passengers is also increasing, leading to the development of different safety arrangements for vehicles. It has been noticed that slideable roof sections, such as a sun roof, can be dangerous to passengers during or after a collision, e.g. with another vehicle. During a collision such a slideable roof section can be severely damaged and due to any damage imparted to the slideable roof section, the slideable roof section can fully or at least partly come loose from the vehicle. This can have severe complications, for instance, passengers can be thrown out of the vehicle, if the vehicle rolls before, during or after a collision. Alternatively passenger's limbs may accidentally be extended out via the opening in the roof, leading to severe complications for the passengers. Further, items which are present in the passenger compartment of the vehicle may be thrown out via the roof opening of the vehicle, putting a third party in jeopardy.

The just mentioned factors have lead to some attempts in providing safety arrangements for this kind of slideable roof section. One such arrangement is disclosed in the patent publication of US 6,309,014 B1. The document discloses a roof arrangement for a roof aperture of a motor vehicle which has at least one slideable roof section mounted on a guide. The roof section is movable in the longitudinal direction of the vehicle. The roof section is further connected to a fixing device which secures the roof section with a positive and/or negative fitting relative to the guide in the event of a vehicle deceleration caused by a collision. The fixing device uses the inertia imparted to the vehicle during the collision to fix the roof section and to prevent accidental dislocation of the roof section.

<

WO2006/027510 A1 discloses a vehicle with a body and a slideable door comprising a safety arrangement to prevent accidental dislocation of the slideable door. The door comprises a retaining element which engages with a rail on the body to retain the door in relation to the body upon a collision and when the door is deformed. >

Another roof construction to prevent accidental dislocation of a slideable roof is disclosed in the publication of US 2001/054834 A1. The construction comprises a slideable roof section, in the form of a sun screen, with an upper and a lower closure section. The lower closure section comprises a hook member which engages an associated guide rail. The hook member engages the guide rail when an excessive, upwards load is exerted on the lower closure element, so as to retain the lower closure element in a correct position. The construction protects the sun screen from being forced out during e.g. a collision.

Systems like the ones just described suffer from several drawbacks. As an example, when a vehicle collides with an object or another vehicle, the impact pulse can deform the vehicle in a very unpredictable way. The just described systems can easily be deformed during a collision and rendered less efficient or even worse, useless. It would further seem that the above mentioned systems are sensitive to the direction of the impact pulse. Hence, there is still much left to ask for with respect to vehicle and passenger safety issues.

### SUMMARY OF THE INVENTION

At least some of the mentioned drawbacks are at least partly solved by the present invention. More specifically, they are at least partly solved by a safety arrangement for securing accidental dislocation of a slideable member on a vehicle. The safety arrangement comprises a female member and a male member, wherein one of the male or female members are arranged on the slideable member and the remaining member of the male or female members is arranged on the vehicle. The slideable member is operable, with respect to the vehicle, along an opening and closing direction between a first position, in which the male member is mated with the female member, and a second position, in which the male member is removed from the female member. When the male member and the female member are in the first position, the male member and the female member are arranged to engage each other to upon displacement of at least one of the male or female members with respect to each other, the displacement of at least one of the male or female members being in a different direction than the opening and closing direction. The present invention provides a safety arrangement for securing accidental dislocation of a slideable member on a vehicle which is less sensitive to the direction of the impact pulse and the forces imparted to the vehicle. It further provides a robust arrangement which can utilize the impact pulse imparted to the vehicle to engage and retain the slideable member in an advantageous position with respect to safety. Since the male member can be inserted and retracted from the female member uninterrupted for as long as they follow the opening and closing direction, the safety arrangement does not influence the daily operation of a slideable member. Such a daily operation of a slideable member can be the opening and closing of a slideable sun roof, i.e. a slideable section of the roof of the vehicle which can be opened and closed for the sake of the comfort of the passengers. However the smallest diversion from the opening and closing direction, i.e. a diversion over a predetermined magnitude, would cause the male member to engage the female member.

The displacement can be the result of a force imparted to the vehicle and/or the displacement can be actuated as a response to a detected force imparted to the vehicle or to a detected imminent collision. The different embodiments, according to the present invention, provide different advantages. For instance, if the safety arrangement is arranged to be displaced upon a collision with another vehicle, object or the like, either the female or the male member is arranged on a part of the vehicle which is easily deformed, disrupted or displaced by an imparted impact pulse from the collision. If the tolerance between the male and the female member is made very small, the sensitivity of the safety arrangement can be very high and thereby provide a safety arrangement which is very responsive to external forces imparted to the vehicle. As an additional measure of safety, the female member or the male member can be displaced on purpose, e.g. by a sensor triggered response. If the safety arrangement is connected to a sensor arrangement a collision can be detected or even predicted, as a response to such a detection or prediction, the female and/or male member can be displaced which causes the female and male member to engage each other, which in turn prevents the slideable member from any accidental dislocation.

The slideable member can be a slideable door, a slideable panel arranged inside or outside the vehicle's passenger compartment, however, the preferred embodiment is a safety arrangement for securing accidental dislocation of a slideable roof section on a vehicle, especially on an automotive vehicle, such as a car, and the slideable member is preferably a sun roof.

In an embodiment of the present invention the slideable member is a slideable roof section, as such, the slideable roof section can comprise a non-transparent material layer or alternatively a transparent material layer, such as a glass layer, and optionally a support structure. The female or male member can advantageously be arranged to the support structure by e.g. welding, adhesive, screws or the like. This permits a strong connection, further, a support structure effectuates an imparted impact pulse more efficiently, especially a rigid support structure. In one embodiment, according to the present invention, the male member is arranged on the support structure.

In an embodiment, according to the present invention, the male member comprises a substantially elongated body and at least one flange protruding around the periphery, optionally at least two flanges protruding around the periphery. More specifically, the male member comprises a first and a second end wherein the first end is arranged on the slideable member or on the vehicle, e.g. the frame work of the vehicle, and the second end comprises the protruding flange. An additional around the periphery protruding flange can be arranged between the first and second end of the male member. Additional protruding flanges increase the probability of good engagement between the male and the female members.

In an embodiment, according to the present invention, the female member comprises a housing with a substantially cylindrical formed cavity wherein the cylindrical formed cavity is arranged to receive the male member. The housing can in itself be formed like e.g. a rectangular box which can be fixed to the vehicle or optionally it can form part of the vehicle itself, e.g. the frame work of the vehicle. The housing of the female member comprises a first and a second end, in this embodiment of the present invention, equivalent with the openings of the through going cylindrical formed cavity, wherein the male member when is positioned in the first position the male member extends through the cylindrical formed cavity and passes the first and second ends of the housing. In alternative embodiments according to the present invention, the male member does not extend through the whole of the cylindrical formed cavity. The female member of such an embodiment can comprise a second cavity with a different diameter than the first cavity, and/or engaging wall protrusions extending out from the cavity wall towards the centre of the cavity, such as saw tooth formed wall protrusions, which are arranged to engage the male member.

Further the cylindrical formed cavity of the female member can be a right circular cylinder form, i.e. the cross section of the cylinder formed in the housing of the female member is circular. Alternatively, the cross section of the cylinder formed cavity is triangular, square formed, rectangular, or any other orthogonal cylinder form, oval forms and unsymmetrical forms and non-uniform cross section forms are also possible. For instance, the female member may have cylinder formed cavity with an octagonal formed cross section while the male member has a protruding flange which has an octagonal formed cross section. Nevertheless, it is important that the protruding flange of the male member has a corresponding cross section as the cross section of the cylinder formed cavity. It is preferred that the cylindrical formed cavity is a right circular cylinder and that the flange protruding around the periphery of the male member has a circular cross section.

### DEFINITIONS

When the terminology "arranged to the vehicle" is used herein, it should be interpreted as if something is arranged to the vehicle, as in opposite of being arranged to the sliding member.

With the term "passenger" or "passengers" it is meant any occupant in a vehicle, including any driver(s).

### BRIEF DESCRIPTION OF THE DRAWINGS

The present invention will be described in greater detail with reference to the accompanying figures in which;
figure 1 shows a vehicle with a slideable sun roof seen in perspective;
figure 2 shows parts of the vehicle's frame work and the sun roof, as seen in figure 1;
figures 3a-3b show a cross section of the sun roof and a safety arrangement according to one embodiment of the present invention;
figures 4a-4c show different embodiments of the male and female members of a safety arrangement according to the present invention;
figures 5a-5b show the safety arrangement according to the present invention from figure 2 with a view from above;
figures 6a-6d show a sun roof in an opened and closed position equivalent to a first and a second position equipped with a safety arrangement according to one embodiment of the present invention;
figures 7a-7b show an alternative embodiment of a female member used in a safety arrangement according to the present invention.

### DETAILED DESCRIPTION OF PREFERRED EMBODIMENTS

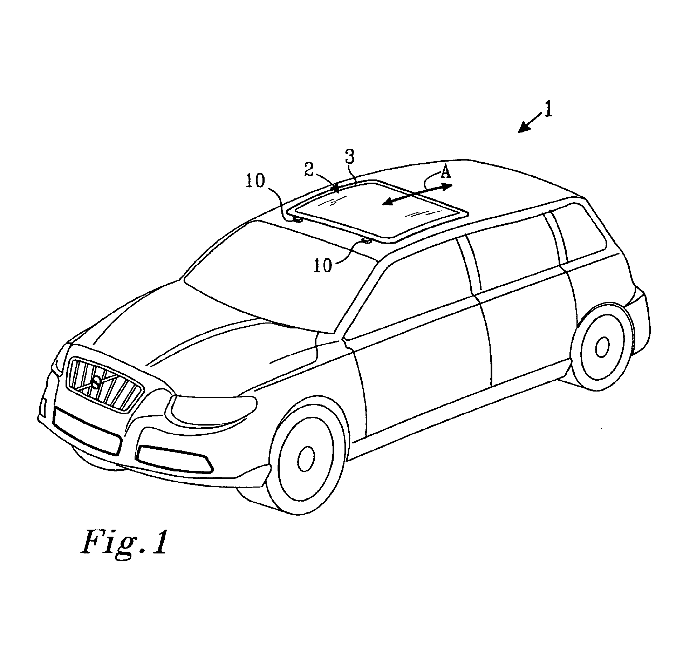

Figure 1 shows a schematic view of a vehicle 1 as seen in perspective. The vehicle 1 comprises a slideable member 2 in the form of a slideable sun roof 3, covering an aperture in the roof of the vehicle. While the sun roof 3 is closed, it is positioned in a first position while upon opening the sun roof 3, the sun roof 3 slides along an opening and closing direction A to a second position, in which the sun roof 3 is opened. Two safety arrangements 10, according to the present invention, are arranged on the sun roof 3 and the vehicle 1. Hereafter the invention will only be described with reference to one safety arrangement, however, it is of course well within the boundaries of the present invention that at least one safety arrangement is used, preferably at least two safety arrangements, or optionally even 3, 4, 5, or 6 safety arrangements are used together with a slideable member on a vehicle. The safety arrangement 10 is arranged to prevent the sun roof from being accidentally dislocated e.g. by a force imparted to the vehicle during a collision with another vehicle. As such, the safety arrangement is arranged to permit the opening and closing of the sun roof 3 as the sun roof 3 slides along the opening and closing direction A, while at the same time prevent the sun roof 3 from dislocation when the vehicle is imparted with a deformable force from e.g. a collision, which can at least partly deform the vehicle.

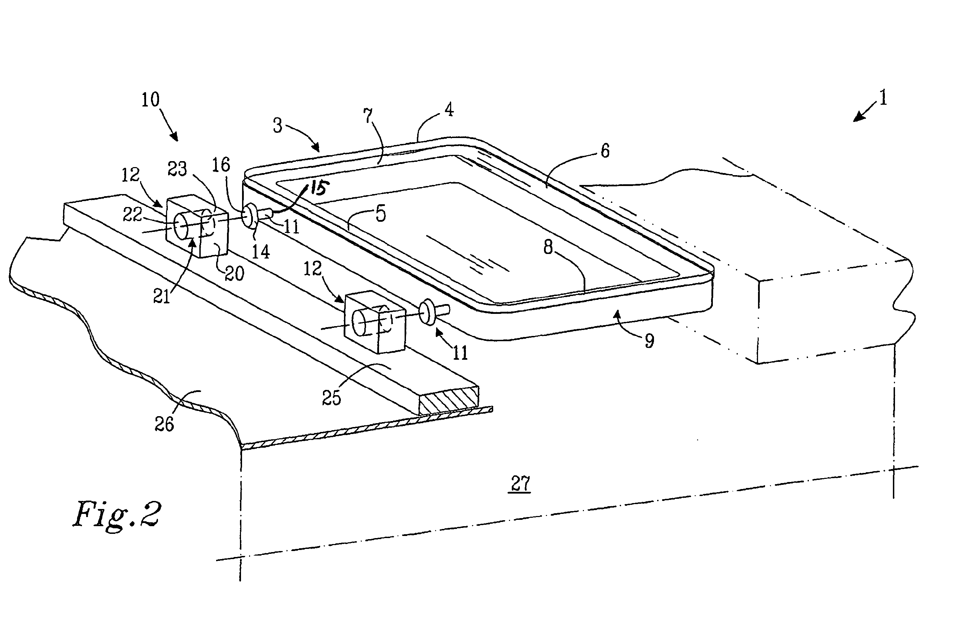

Figure 2 shows the sun roof 3 and parts of the vehicle 1. The sun roof 3 comprises a substantially rectangular panel 4, which in this embodiment of the present invention is made of a rigid transparent glass material. The rectangular panel 4 comprises a first and a second opposing side 5, 6, a third and a forth side 7, 8. The first side 5 of the panel 4 is oriented at the front of the vehicle 1, the opposing second side is oriented towards the back of the vehicle 1. The third side 7 is oriented towards the right side while the fourth side 8 is oriented towards the left side of the vehicle 1, as seen from a driver's perspective when sitting in the driver's seat facing forwards. A support structure 9 in the form of a rigid frame extends in the proximity of the first, second, third and fourth side 5, 6, 7, 8 of the panel 4 to support the panel 4. The support structure 9 stabilizes the panel 4 and enables a safe and controlled motion along the opening and closing direction A without imparting tensional forces to the panel 4.

Two safety arrangements 10, according to the present invention, are advantageously arranged respectively at the first side 5 and at the second side 6 of the panel 4, hereafter however only one safety arrangement will be described. The safety arrangement 10, according to one embodiment of the present invention, is arranged on the support structure 9 at the first side 5 of the panel 4 and on parts of the vehicle 1. The safety arrangement 10 comprises a male member 11 and a female member 12 which are arranged to mate when the sun roof 3 is closed. Figure 2 shows the sun roof 3, the male member 11 and the female member 12 in the second position, i.e. when they are separated from each other.

The male member 11 has a substantially elongated body 13 with a first and a second end 14, 15. The first end 14 of the male member 11 comprises a flange 16 protruding around the periphery which gives the male member 12 a form substantially like a nail head. The elongated body 13 is preferably about 6-10 mm in diameter and about 20-40 mm long. The protruding flange 16 has preferably a diameter of about 12-18 mm. The second end 15 of the male member 11 is arranged on the support structure 9 by e.g. welding or the like. Optionally, the male member 11 can form an integrated part of the support structure 9.

The female member 12 comprises a housing 20 with a rectangular form having a cylindrical cavity 21 with a first and a second end 22, 23 extending through the housing 20. The diameter of the cylindrical cavity 21 is preferably about 12-19 mm. Preferred material for the male and female members 11, 12 is metal such as steel or aluminum. The cylindrical cavity 21 extends substantially parallel to the opening and closing direction A enabling the male member 11 to be inserted into the cylindrical cavity 21 as the sun roof 3 slides to the first position. The cylindrical cavity 21 comprises an inner diameter which is just a little bit larger than the diameter of the protruding flange 16. As such, the male member 11 and the protruding flange 16 can be inserted and retracted from the cylindrical cavity 21 of female member 12, however, displacement of the female member 12 or the male member 11 in a direction which is not along the opening and closing direction A will instantly engage the male member 11 in the female member 12, as will be described in greater detail below.

As mentioned, parts of the vehicle 1 are shown in figure 2. More specifically, parts of the metal frame work 25 are shown. A first side of an interior panel 26 is mounted to the metal frame work 25, the second side, opposite the first side, of the interior panel 26 faces the passenger compartment 27 of the vehicle 1. The female member 12 is attached to the metal frame work 25 of the vehicle 1 by means of welding or any other suitable fixation means. By attaching the female member 12 to the metal frame work 25 of the vehicle 1, a very rigid safety arrangement 10 is provided. In one embodiment of the present invention, the female member 12 can be formed directly by the metal frame work 25 of the vehicle 1 or any other suitable part of the vehicle 1.

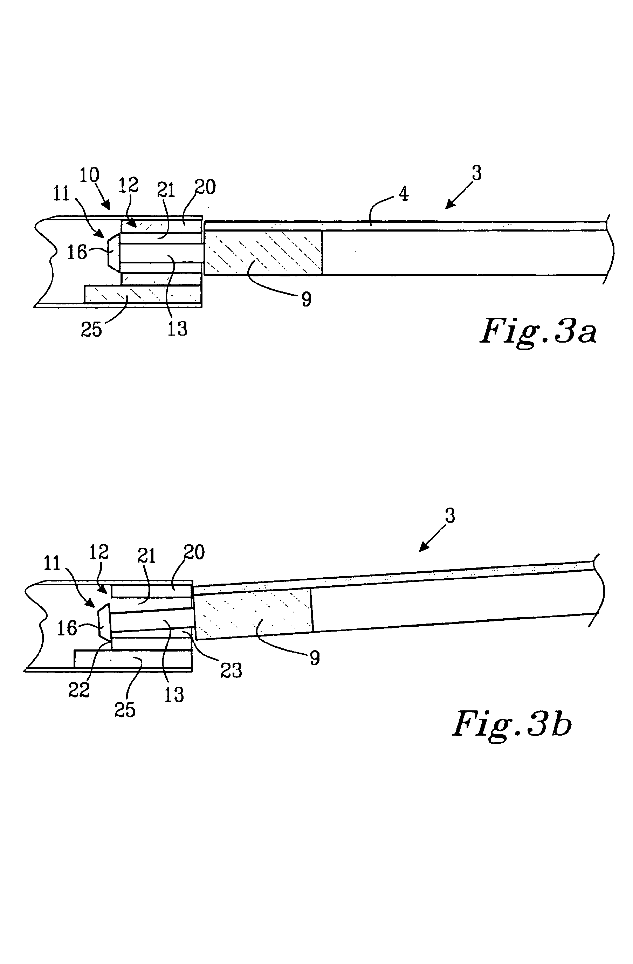

Figures 3a-3b show a cross section of the embodiment shown in figure 2. More specifically a safety arrangement 10 is shown with a male member 11 attached to the support structure 9, which in turn is attached to the panel 4, and a female member 12 attached to the metal frame work 25 of vehicle 1. The male member 11 and the female member 12 are in the first position, i.e. they are mated. The elongated body 13 of the male member 11 extends through the cylindrical cavity 21 so that the protruding flange 16 of the male member 11 is positioned outside the cylindrical cavity 21 and the housing 20 of the female member 12. If the vehicle 1 collides with another vehicle or any other force is imparted to the vehicle 1, the male member 11, as shown in figure 3b, is displaced with respect to the female member 12. When displaced, the protruding flange 16 instantly engages the first end 22 of the cylindrical cavity 21 of the housing 20. As the protruding flange 16 is engaged with the first end 22 of the cylindrical cavity 21, the panel 4 is effectively prevented from further displacement. In practice, the sun roof 3 is prevented from dislocation and is thereby kept in place by the safety arrangement 10. This is beneficial since by keeping the sun roof 3 in its closed position after a collision, passengers or items present in the passenger compartment 27 can be prevented from being projected out from the vehicle 1 via the roof aperture.

It has been found that a safety arrangement 10, according to the present invention, is very sensitive to forces imparted to the vehicle such as an accident with another vehicle. Vehicles of today are constructed to absorb the impact of e.g. another vehicle or the impact with an object, in order to absorb as much energy as possible, the vehicle crumples, the frame work bends or the like, to absorb the energy. The impact pulse of the impact can thus be used to displace either the male or female member 11, 12 of the safety arrangement 10 whereby they engage each other and prevents any further dislocation of the sun roof 3 with respect to the vehicle 1. As a consequence, an improved safety arrangement is provided which is not negatively affected by a collision and a deformed vehicle.

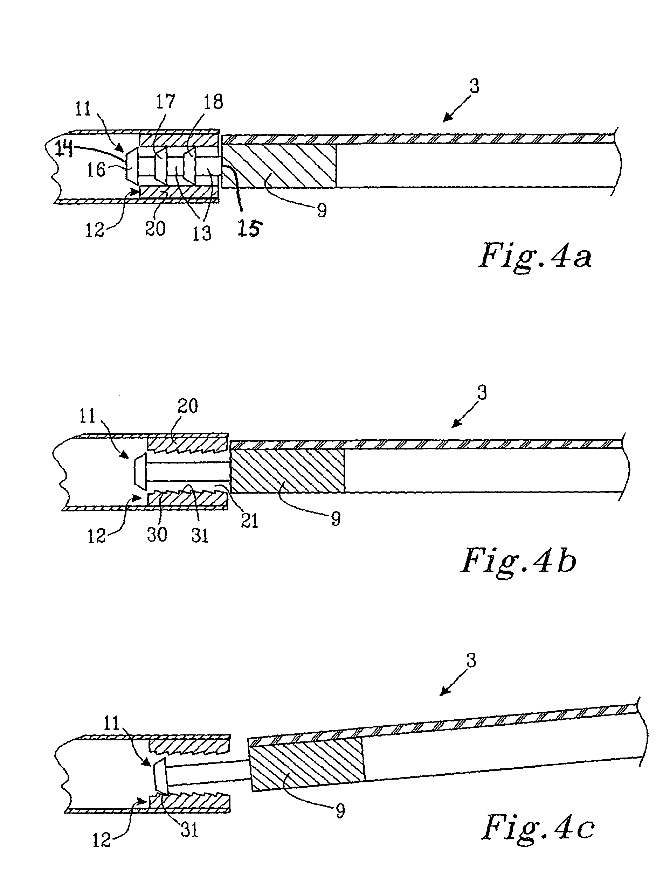

Figure 4a shows a different embodiment of the male member 11. In the shown embodiment, according to the present invention, the male member is illustrated with an elongated body 13 having a first and a second end 14, 15. The first end 14 of the elongated body 13 comprises a flange 16 protruding around the periphery, just as described above. Additionally, two more flanges 17, 18 protruding around the periphery are arranged on the elongated body 13. As is evident this will further improve the grappling properties of the male member 11, especially when combined with a female member 12 as shown in figures 4b-4c and described in the text relating thereto.
Figure 4b shows a female member 12 comprising a housing 20 with a cylindrical cavity 21 which extends through the housing 20. The cylindrical cavity 21 comprises a cavity wall having an inner surface 30 which is provided with a plurality of engaging wall protrusions, such as saw tooth formed wall protrusions 31, which extend around the periphery of the inner surface 30 of the cylindrical cavity 21. As is shown in figure 4c, when either the female member 12 or the male member 11 is displaced, with respect to the other male or female member 11, 12, the male member 11 and the female member 12 engage and prevent any further displacement of the sun roof 3. The protruding flange 16 of the male member 11 has engaged with one of the saw tooth wall protrusions 31 on the inner surface 30 of the cylindrical cavity 21. This embodiment improves the grappling properties of the female member 12 and thereby also the safety arrangement 10.

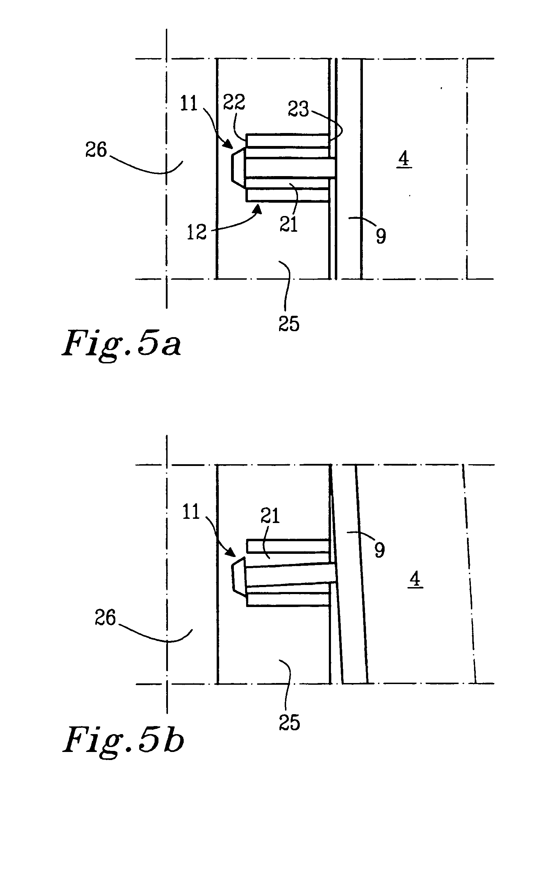

Figures 5a-5b show the safety arrangement 10 according to the present invention as shown in figure 2 with a view from above. As can be seen, the cylindrical cavity 21 of the housing 20 of the female member 12 and the protruding flange 16 will engage each other independently of the direction of the dislocation of the members 11, 12, this is also a important property of a female and a male member functionality according to the present invention. A very versatile safety arrangement 10 is provided which functions in a wide variety of different scenarios.

The sun roof 3 can be provided with a plurality of safety arrangements 10 according to the present invention. As is shown in figure 2, the sun roof is provided with two safety arrangements 10, although three, four, five, six or more safety arrangements 10 are possible dependent on the application.

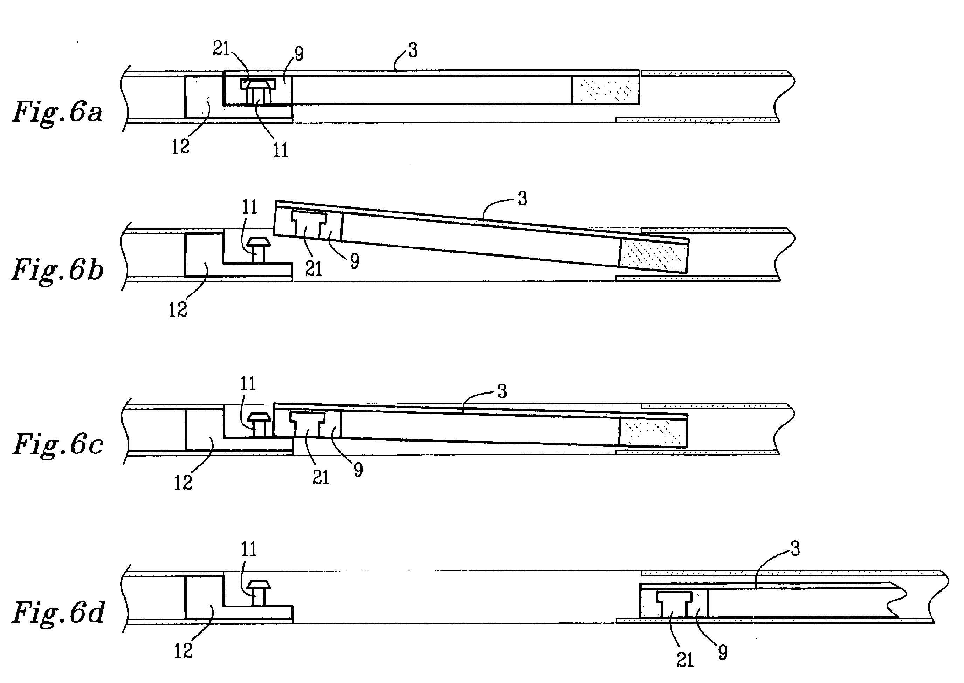

Figures 6a-6d show another embodiment of the present invention in which a male member 11 is arranged on the frame work of the vehicle and the female member 12 is arranged on the sun roof 3 and its support structure 9. In the shown embodiment of the present invention, the female member 12 forms an integral part of the support structure 9 to the sun roof 3. To move the sun roof 3 between the first position, in which the male and female members 11, 12 are mated with each other, and the second position, in which the male and female members 11, 12 are removed from each other, the sun roof 3 is first tilted upwards and thereafter slid into the vehicles roof. The female member 12, in the shown embodiment, comprises a housing 20 with a substantially cylinder formed cavity 21, however instead of being a through going cavity, as described above; the cavity extends only partially through the housing 20. The cavity is further provided with a section of the cavity which has a larger diameter than the substantially cylindrical formed cavity 21, to provide a first end of the cavity which can engage the protruding flange 16 of the male member 11 after displacement of either the male or female member 11, 12.

In the above described embodiments, the dislocation is illustrated with the dislocation of the male member 11 with respect to the female member 12, however, the female member 12 can of course be dislocated with respect to the male member 11 or they may both be dislocated with respect to each other.

As is understood when reading this description, the displacement of the male member and the female member is readily dependent on how the frame work of the vehicle responds to a collision. To further improve the safety arrangement according to the present invention, the safety arrangement can be arranged on a frame work with predetermined trigger areas. A predetermined trigger area is an area at which the frame work is intended to bend, fold or crumple during a collision with another vehicle, object or the like. Such a predetermined trigger area can significantly improve the probability that the male and female member are displaced with respect to each other so that the male member readily engages the female member.

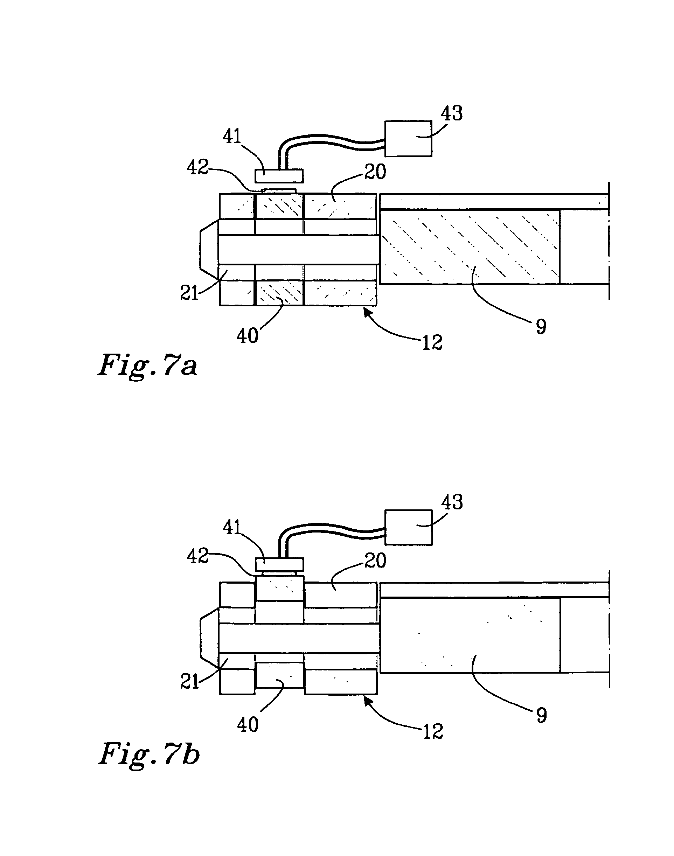

In another embodiment of the present invention, the safety arrangement can be connected to an impact sensor arrangement such as a radar sensor, a camera and a processing unit. If the impact sensors detect an impact, they can initiate a signal to the safety arrangement 10 to engage the male member with the female member. Such an engagement means can be integrated with e.g. the female member of the safety arrangement. As en example, a part of the cylindrical cavity can be movable between a locked position, in which the male member can not be inserted or retracted from the female member, and an unlocked position in which the male member can be inserted and retracted from the female member. Figures 7a-7b show one such an embodiment of a female member with an extended housing. More specifically, figure 7a shows a female member with an extended housing 12 which is mated with a male member 11 in the first position. The female member with an extended housing 12 comprises a housing 20 with a cylindrical cavity 21 extending through the housing 20. A movable female member 40 forms a part of the cylindrical cavity and is moveable between an unlocked position, as shown in figure 7a, and a locked position, as shown in figure 7b. The motion of the movable female member 40 is imparted by a solenoid switch 41 connected to a power source 43, and a corresponding solenoid 42 attached to the movable section 40. The arrangement can further be used to move the movable section 40 to the locked position just before impact or collision with the vehicle to prevent accidental dislocation of the sun roof, the connected sensors are then adapted to detect an imminent impact scenario.

## Claims

1. A safety arrangement for securing accidental dislocation of a slideable member (2) on a vehicle (1), said safety arrangement (10) comprises a female member (12) and a male member (11), wherein one of said male or female members (11, 12) is arranged on said slideable member (2) and the remaining member of said male or female member (11, 12) is arranged on said vehicle (1),
said slideable member (2) is operable, with respect to said vehicle (1), along an opening and closing direction (A) between a first position, in which said male member (11) is mated with said female member (12), and a second position, in which said male member (11) is removed from said female member (12), wherein when said male member (11) and said female member (12) are in said first position, said male member (11) and said female member (12) are arranged to engage each other to upon displacement of at least one of said male or female members (11, 12) along a different direction than said opening and closing direction (A) and with respect to each other,
**characterized in that**
said displacement is actuated as a response to a detected force imparted to said vehicle (1) or to a detected imminent collision.

2. The safety arrangement according to claim 1, **characterized in that** said at least one of said male or female members (11, 12) are arranged to be displaced due to a deformation force imparted to said vehicle (1), said deformation force deforming at least a part of said vehicle enough to displace said at least one of said male or female members (11, 12).

3. The safety arrangement according to any preceding claims, **characterized in that** said slideable member (2) is a slideable roof section, preferably a sun roof (3).

4. The safety arrangement according to claim 3, **characterized in that** said slideable roof section comprises a transparent material layer (4) and a support structure (9), said female or male member (11, 12) being arranged on said support

5. The safety arrangement according to claim 4, **characterized in that** said male member (11) is arranged to said support structure 9.

6. The safety arrangement according to any preceding claims, **characterized in that** said male member (11) comprises a substantially elongated body (13) and at least one flange (16, 17, 18) protruding around the periphery.

7. The safety arrangement according to claim 6, **characterized in that** said male member (11) comprises at least two flanges (16, 17) protruding around the periphery.

8. The safety arrangement according to claim 6 or 7, **characterized in that** said male member (11) comprises a first and a second end (14, 15), said second end (15) is arranged on said slideable member (2) or said vehicle (1), and said first end (14) comprises said protruding flange (16).

9. The safety arrangement according to claim 8, **characterized in that** an additional around the periphery protruding flange (17, 18) is arranged between said first and second end (14, 15) of said male member (11).

10. The safety arrangement according to any preceding claims, **characterized in that** said female member (12) comprises a housing (20) with a substantially cylindrical formed cavity (21), said cylindrical formed cavity (21) is arranged to receive said male member (11).

11. The safety arrangement according to claim 10, **characterized in that** said substantially cylindrical formed cavity (21) is a through going cylindrical formed cavity (21), extending through said housing (20).

12. The safety arrangement according to claim 11, **characterized in that** said cylindrical formed cavity (21) of said female member (12) comprises a first and a second end (22, 23), wherein said male member (11) when being positioned in said first position extends through said substantially cylindrical formed cavity (21) and past said first and second ends (22, 23).

13. The safety arrangement according to any of claims 10-12 **characterized in that** said substantially cylindrical formed cavity (21) comprises a cavity wall, defining said cylindrical formed cavity, and **in that** a plurality of engaging wall protrusions (31) extends out from said cavity wall towards the centre of said cylindrical formed cavity (21), said plurality of engaging wall protrusions (31) is arranged to engage said male member (11).

14. The safety arrangement according to any preceding claims, **characterized in that** said female member (12) comprises a housing (20) with a substantially cylindrical formed cavity (21), said cylindrical formed cavity (21) is arranged to receive said male member (11), and **in that** said male member (11) comprises a substantially elongated body (13) and at least one flange (16, 17, 18) protruding around the periphery, wherein the cross section of said cylindrical formed cavity (21) is arranged to substantially correspond to the cross section of said flange (16, 17, 18) protruding around the periphery.

## Patentansprüche

1. Eine Sicherheitsanordnung zum Absichern gegen unbeabsichtigtes Verlagern eines Schiebeelementes (2) an einem Fahrzeug (1), wobei diese Sicherheitsanordnung (10) ein buchsenartiges Element (12) und ein steckerartiges Element (11) umfasst, wobei eines dieser buchsenartigen oder steckerartigen Elemente (11, 12) an dem Schiebeelement (2) angeordnet ist, und das verbleibende dieser buchsenartigen oder steckerartigen Elemente (11, 12) an dem Fahrzeug (1) angeordnet ist,
wobei das Schiebeelement (2) in Bezug auf das Fahrzeug (1) entlang einer öffnenden und schließenden Richtung (A) zwischen einer ersten Position, in welcher das steckerartige Element (11) und das buchsenartige Element (12) zusammengefügt sind, und einer zweiten Position, in welcher das steckerartige Element (11) von dem buchsenartigen Element (12) getrennt ist, bedienbar ist, wobei, wenn das steckerartige Element (11) und das buchsenartige Element (12) in der ersten Position sind, das steckerartige Element (11) und das buchsenartige Element (12) so angeordnet sind, dass sie nach der Verschiebung mindestens eines dieser buchsenartigen oder steckerartigen Elemente (11, 12) in Bezug zueinander und entlang einer anderen Richtung als der öffnenden und schließenden Richtung (A) ineinander greifen,
**dadurch gekennzeichnet, dass** diese Verschiebung als Reaktion auf eine festgestellte auf das Fahrzeug (1) einwirkende Kraft oder auf einen festgestellten unmittelbar bevorstehenden Zusammenstoß ausgelöst wird.

2. Die Sicherheitsanordnung nach Anspruch 1, **dadurch gekennzeichnet, dass** mindestens eines der buchsenartigen oder steckerartigen Elemente (11, 12) so angeordnet ist, dass es infolge einer auf das Fahrzeug (1) einwirkenden deformierenden Kraft verschoben wird, wobei die deformierende Kraft mindestens einen Teil des Fahrzeugs genügend verformt, um mindestens eines der buchsenartigen oder steckerartigen Elemente (11, 12) zu verschieben.

3. Die Sicherheitsanordnung nach einem der vorangehenden Ansprüche, **dadurch gekennzeichnet, dass** das Schiebeelement (2) ein verschiebbarer Dachabschnitt, vorzugsweise ein Sonnendach (3), ist.

4. Die Sicherheitsanordnung nach Anspruch 3, **dadurch gekennzeichnet, dass** der verschiebbare Dachabschnitt eine durchsichtige Materialschicht (4) und eine Stützstruktur (9) umfasst, wobei das buchsenartige oder steckerartigen Element (11, 12) auf der Stützstruktur (9) angeordnet sind.

5. Die Sicherheitsanordnung nach Anspruch 4, **dadurch gekennzeichnet, dass** das steckerartige Element (11) an der Stützstruktur (9) angeordnet ist.

6. Die Sicherheitsanordnung nach einem der vorangehenden Ansprüche, **dadurch gekennzeichnet, dass** das steckerartige Element (11) einen im wesentlichen länglichen Körper (13) und mindestens einen um den Umfang herum hervortretenden Flansch (16, 17, 18) umfasst.

7. Die Sicherheitsanordnung nach Anspruch 6, **dadurch gekennzeichnet, dass** das steckerartige Element (11) mindestens zwei um den Umfang herum hervortretende Flansche (16, 17) umfasst.

8. Die Sicherheitsanordnung nach Anspruch 6 oder 7, **dadurch gekennzeichnet, dass** das steckerartige Element (11) ein erstes und ein zweites Ende (14, 15) umfasst, wobei das zweite Ende (15) an dem Schiebeelement (2) oder an dem Fahrzeug (1) angeordnet ist und das erste Ende (14) den hervortretenden Flansch (16) umfasst.

9. Die Sicherheitsanordnung nach Anspruch 8, **dadurch gekennzeichnet, dass** ein zusätzlicher um den Umfang herum hervortretender Flansch (17, 18) zwischen dem ersten und zweiten Ende (14, 15) des steckerartigen Elements (11) angeordnet ist.

10. Die Sicherheitsanordnung nach einem der vorangehenden Ansprüche, **dadurch gekennzeichnet, dass** das buchsenartige Element (12) ein Gehäuse (20) mit einer im wesentlichen zylindrisch geformten Aushöhlung (21) umfasst, wobei die zylindrisch geformte Aushöhlung (21) darauf ausgelegt ist, das steckerartige Element (11) aufzunehmen.

11. Die Sicherheitsanordnung nach Anspruch 10, **dadurch gekennzeichnet, dass** die im wesentlichen zylindrisch geformte Aushöhlung (21) eine durchgehende zylindrisch geformte Aushöhlung (21) ist, die sich durch das Gehäuse (20) hindurch erstreckt.

12. Die Sicherheitsanordnung nach Anspruch 11, **dadurch gekennzeichnet, dass** die zylindrisch geformte Aushöhlung (21) des buchsenartigen Elements (12) ein erstes und ein zweites Ende (22, 23) umfasst, wobei sich das steckerartige Element (11), wenn es sich in der genannten ersten Position befindet, durch die im wesentlichen zylindrisch geformte Aushöhlung (21) hindurch und über die ersten und zweiten Enden (22, 23) hinaus erstreckt.

13. Die Sicherheitsanordnung nach einem der Ansprüche 10 bis 12, **dadurch gekennzeichnet, dass** die im wesentlichen zylindrisch geformte Aushöhlung (21) eine Aushöhlungswand umfasst, welche die zylindrisch geformte Aushöhlung definiert, und dass sich eine Mehrzahl an eingreifenden Wandvorsprüngen (31) aus der Kavitätswand heraus in Richtung des Zentrums der zylindrisch geformten Aushöhlung (21) erstrecken, wobei die Mehrzahl von eingreifenden Wandvorsprüngen (31) so angeordnet sind, dass sie an dem steckerartigen Element (11) angreifen.

14. Die Sicherheitsanordnung nach einem der vorangehenden Ansprüche, **dadurch gekennzeichnet, dass** das buchsenartige Element (12) ein Gehäuse (20) mit einer im wesentlichen zylindrisch geformten Aushöhlung (21) umfasst, wobei die zylindrisch geformte Aushöhlung (21) darauf ausgerichtet ist, das steckerartige Element (11) aufzunehmen, und dass das steckerartige Element (11) einen im wesentlichen länglichen Körper (13) und mindestens einen um den Umfang herum hervortretenden Flansch (16, 17, 18) umfasst, wobei der Querschnitt der zylindrisch geformten Aushöhlung (21) dazu ausgelegt ist, im wesentlichen dem Querschnitt des um den Umfang herum hervortretenden Flanschs (16, 17, 18) zu entsprechen.

## Revendications

1. Ensemble de sécurité pour sécuriser une dislocation accidentelle d'un élément coulissant (2) monté sur un véhicule (1), ledit ensemble de sécurité (10) comprenant un élément femelle (12) et un élément mâle (11), dans lequel l'un desdits éléments (11, 12) mâle ou femelle étant situé sur ledit élément coulissant (2) et l'élément restant desdits éléments (11, 12) mâle ou femelle étant situé sur ledit véhicule (1),
ledit élément coulissant (2) étant actionnable, par rapport audit véhicule (1), le long d'une direction (A) d'ouverture et de fermeture, entre une première position, dans laquelle ledit élément mâle (11) est accouplé audit élément femelle (12), et une deuxième position, dans laquelle ledit élément mâle (11) est retiré dudit élément femelle (12),
dans lequel lorsque ledit élément mâle (11) et ledit élément femelle (12) sont dans ladite première position, ledit élément femelle (11) et ledit élément femelle (12) sont agencés pour s'engager mutuellement lors du déplacement d'au moins l'un desdits éléments (11, 12) mâle ou femelle dans une direction différente de ladite direction (A) d'ouverture et de fermeture et l'un par rapport à l'autre,
***caractérisé en ce que***
ledit déplacement est déclenché en réponse à une force détectée communiquée audit véhicule (1) ou à une collision imminente détectée.

2. Ensemble de sécurité selon la revendication 1, ***caractérisé en ce que*** ledit au moins l'un desdits éléments mâle ou femelle (11, 12) est agencé pour être déplacé sous une force de déformation communiquée audit véhicule (1), ladite force de déformation déformant suffisamment au moins une partie dudit véhicule pour déplacer ledit au moins l'un desdits éléments mâle ou femelle (11, 12).

3. Ensemble de sécurité selon l'une quelconque des revendications précédentes, ***caractérisé en ce que*** ledit élément coulissant (2) est une section de toit coulissant, de manière préférée un toit ouvrant (3).

4. Ensemble de sécurité selon la revendication 3, ***caractérisé en ce que*** ladite section de toit coulissant comprend une couche (4) de matériau transparent et une structure de support (9), ledit élément femelle ou mâle (11, 12) étant agencé sur ladite structure de support (9).

5. Ensemble de sécurité selon la revendication 4, ***caractérisé en ce que*** ledit élément mâle (11) est situé sur ladite structure de support (9).

6. Ensemble de sécurité selon l'une quelconque des revendications précédentes, ***caractérisé en ce que*** ledit élément mâle (11) comprend un corps essentiellement allongé (13) et au moins une bride (16, 17, 18) en saillie autour de la périphérie.

7. Ensemble de sécurité selon la revendication 6, ***caractérisé en ce que*** ledit élément mâle (11) comprend au moins deux brides (16, 17) en saillie autour de la périphérie.

8. Ensemble de sécurité selon la revendication 6 ou 7, ***caractérisé en ce que*** ledit élément mâle (11) comprend une première et une deuxième extrémités (14, 15), ladite deuxième extrémité (15) est située sur ledit élément coulissant (2) ou ledit véhicule (1), et ladite première extrémité (14) comprend ladite bride (16) en saillie.

9. Ensemble de sécurité selon la revendication 8, ***caractérisé en ce qu'***une bride supplémentaire (17, 18) en saillie autour de la périphérie est placée entre lesdites première et deuxième extrémités (14, 15) dudit élément mâle (11).

10. Ensemble de sécurité selon l'une quelconque des revendications précédentes, ***caractérisé en ce que*** ledit élément femelle (12) comprend un logement (20) avec une cavité (21) de forme essentiellement cylindrique, ladite cavité (21) de forme cylindrique étant agencée pour recevoir ledit élément mâle (11).

11. Ensemble de sécurité selon la revendication 10, ***caractérisé en ce que*** ladite cavité (21) de forme essentiellement cylindrique est une cavité débouchante (21) de forme cylindrique, traversant ledit logement (20).

12. Ensemble de sécurité selon la revendication 11, ***caractérisé en ce que*** ladite cavité (21) de forme essentiellement cylindrique dudit élément femelle (12) comprend une première et une deuxième extrémités (22, 23), ledit élément mâle (11), lorsqu'il est positionné dans ladite première position, s'étendant à travers ladite cavité (21) de forme essentiellement cylindrique et dépassant de la première et la deuxième extrémités (22, 23).

13. Ensemble de sécurité selon l'une quelconque des revendications 10 à 12, ***caractérisé en ce que*** ladite cavité (21) de forme essentiellement cylindrique comprend une paroi de cavité, définissant ladite cavité de forme cylindrique, et *en ce qu*'une pluralité de protubérances d'accouplement (31) sur la paroi font saillie de ladite paroi de cavité en direction du centre de ladite cavité (21) de forme cylindrique, ladite pluralité de protubérances d'accouplement (31) sur la paroi étant agencées pour s'accoupler avec ledit élément mâle (11).

14. Ensemble de sécurité selon l'une quelconque des revendications précédentes, ***caractérisé en ce que*** ledit élément femelle (12) comprend un logement (20) avec une cavité (21) de forme essentiellement cylindrique, ladite cavité (21) de forme cylindrique est agencée pour recevoir ledit élément mâle (11), et ***en ce que*** ledit élément mâle (11) comprend un corps essentiellement allongé (13) et au moins une bride (16, 17, 18) en saillie autour de la périphérie, la section transversale de ladite cavité (21) de forme cylindrique étant agencée pour correspondre essentiellement à la section transversale de ladite bride (16, 17, 18) en saillie autour de la périphérie.
